# EUROPÄISCHE PATENTSCHRIFT

(11) **EP 2 779 580 B1**
(45) Veröffentlichungstag und Bekanntmachung des Hinweises auf die Patenterteilung: **21.10.2015**
(21) Anmeldenummer: 13158834.5
(22) Anmeldetag: 12.03.2013
(51) Int. Cl.: H04L 29/08, H04W 4/00

(54) **Verfahren und Vorrichtung zur Installation von Anwendungen auf mobilen Endgeräten**
Method and apparatus for installing applications on mobile terminals
Procédé et dispositif pour l'installation d'applications sur des terminaux mobiles

(43) Veröffentlichungstag der Anmeldung: 17.09.2014
(73) Patentinhaber: Deutsche Telekom AG, 53113 Bonn (DE)
(72) Erfinder: Wang, Hao, 53229 Bonn (DE); Burkert, Stefan, 53173 Bonn (DE)
(74) Vertreter: 2K Patentanwälte Blasberg Kewitz & Reichel

(56) Entgegenhaltungen:
- EP-A1- 2 175 613
- EP-A1- 2 523 107
- US-A1- 2012 129 503

## Beschreibung

Die Erfindung betrifft ein Verfahren und eine Vorrichtung zur Steuerung der Installation von Anwendungen auf einem mobilen Endgerät. Insbesondere betrifft die Erfindung ein Verfahren für die Installation von vorinstallierten Anwendungen auf mobilen Endgeräten.

### Gebiet der Erfindung:

Mobile Telefone werden heute oftmals durch die Provider der Mobilfunknetze spezifisch mit Anwendungen voreingerichtet. Hierbei wird eine Reihe von Anwendungen schon im Vorfeld vor der Auslieferung an den Kunden auf die Geräte aufgespielt. Beispiele hierfür werden in US 2012129503 und EP 2523107 offenbart.

Diese Anwendungen sind oftmals spezifisch auf den Provider des Mobilfunknetzes ausgerichtet oder für diesen angepasst. Es gibt somit oftmals eine Vielzahl von Versionen von unterschiedlichen Anwendungen für unterschiedliche Mobilfunkprovider. Ferner bewerben Mobilfunkprovider oftmals Produkte und Anwendungen, die Benutzer dann auf ihr mobiles Endgerät laden können, um diese dann darauf aufzuführen. Bei all diesen Anwendungen weiß weder der Mobilfunk-Provider noch der Hersteller der Software, wie häufig diese Anwendungen benutzt werden und ob diese überhaupt installiert wurden. Somit gibt es keine soliden und flexiblen Mechanismen zwischen dem Betreiber eines Mobilfunknetzwerkes und den Anwendungsentwicklern, um Vereinbarungen auf der Basis der Benutzung der Anwendungen nachzuvollziehen. In der Regel werden Anwendungen auch von einem globalen Marktplatz installiert, wie dies zum Beispiel beim iPhone (App Store) oder bei Android-Telefonen (Google Play Store) der Fall ist. Durch diesen zentralen Downloadbereich ist es für einen Provider oftmals nicht möglich zu erkennen, welche Geräte mit welchen Anwendungen versehen werden. Das Gleiche gilt für den Hersteller bzw. die Programmierer der Anwendung, deren Anwendungen durch den zentralen Marktplatz auf die mobilen Endgeräte geladen werden. Die Anwendungsentwickler haben somit keine akkuraten Informationen über die Anzahl von aktiven Installationen und den installierten Treibern. Umsatzbeteiligungsmodelle können dadurch nicht fair sichergestellt werden. Zum Zeitpunkt der ersten Auslieferung muss bekannt sein, welche Anwendungen auf ein mobiles Endgerät vorinstalliert sein sollen. Da eine solche Firmware oftmals über den ganzen Produktzyklus kaum verändert wird, weil sie jeweils umfangreichen Tests unterzogen werden muss, entsprechen die vorinstallierten Anwendungen oftmals über den gesamten Produktzyklus denen, die ursprünglich bei der ersten Auslieferung installiert wurden. Ferner ist zu beachten, dass Programme bei der Bestimmung der Firmware bzw. bei der Zusammenstellung und Konfiguration des mobilen Endgerätes bekannt sein müssen. Anwendungen die im Produktzyklus später auf das mobile Endgerät installiert werden sollen, können somit nicht berücksichtigt werden. Es wird somit ein dynamischer Ansatz verhindert, da die Anwendungen bei der Konfiguration des mobilen Gerätes beim Hersteller bekannt sein müssen. Änderungen im Laufe des Produktzyklus sind somit nur schwer möglich und durch den Netz Provider nicht umsetzbar, da er keinen Zugriff oder nur limitierten Zugriff auf die Firmware besitzt.

### Übersicht über die Erfindung:

Aufgabe der vorliegenden Erfindung ist die Bereitstellung eines Verfahrens/Vorrichtung, bei dem sichergestellt werden kann, dass die vorinstallierten Anwendungen dynamisch installierbar sind und somit der Netzwerk Provider die Möglichkeit hat, die vorinstallierten Anwendungen zu bestimmen.

Dieses Verfahren wird durch die Merkmale der Ansprüche definiert. Im Einzelnen handelt es sich um ein Verfahren zur Steuerung der Installation von Anwendungen auf einem mobilen Endgerät, mit einem Installer, der auf dem mobilen Endgerät installiert ist, und der so in das Betriebssystem des mobilen Endgerätes integriert ist, dass eine Installation im Hintergrund ohne Eingriff eines Benutzers erfolgt, und der die Netzwerkadresse eines Servers kennt, wobei der Server vom Netzprovider über ein Netzwerk bereitgestellt wird, um eine Liste von zulässigen Anwendungen bereitzustellen, wobei die Liste Zertifikate für jede Anwendung umfasst und deren Namen, anhand derer eindeutig festgestellt werden kann, ob die Anwendung berechtigt ist weitere Anwendungen auf dem mobilen Gerät zu installieren. D.h die Liste bezieht sich auf die Anwendungen, die den Installer aufrufen dürfen (in der beschriebenen Ausführungsform nur der "Assistent") weiterhin umfassend einen Assistent, der als Anwendung auf dem mobilen Endgerät läuft, und der die Adresse des Servers kennt, um von diesem eine Liste mit zu installierenden Anwendung zu erhalten,
umfassend die Schritte:
- Herunterladen durch den Installer einer Liste von zulässigen Anwendungen und Speichern dieser Liste auf dem mobilen Endgerät, wobei die Liste die Namen und Zertifikate der zulässigen Anwendungen aufweist;
- Herunterladen durch den Assistenten von dem Server einer Liste von zu installierenden Anwendungen, vorzugsweise beim erstmaligen Starten des mobilen Endgerätes beim Endkunden, wobei die Liste den Speicherort der Anwendungen umfasst;
- Herunterladen durch den Assistenten der Anwendungen aus dem Netzwerk als Installationspakete, um diese als Installationspakete auf dem mobilen Endgerät abzulegen
- Übergabe des Ablageortes der Installationspakete durch den Assistenten an den Installer;
- Überprüfen des Installers mit Hilfe der Zertifikate und der Namen aus der Liste von zulässigen Anwendungen, ob der Assistent berechtigt ist zu bestimmen, welche Anwendungen zu installieren sind, falls die Überprüfung erfolgreich ist, installieren der Anwendung ohne Eingriff durch einen Benutzer.

Im Einzelnen handelt es sich um ein Verfahren zur Steuerung der Installation von Anwendungen auf einem mobilen Endgerät. Bei diesen Endgeräten handelt es sich vorzugsweise um ein Android Telefon oder ein anderes Smartphone, das über eine Netzwerkschnittstelle zu einem IP-Netzwerk verfügt. Diese Smartphones sind in der Regel mit einer Firmware ausgestattet, deren Konfigurationen vom Provider des Netzwerkes festgelegt werden können. Bei dieser Firmware wird schon bei der Auslieferung an den Endkunden ein Installer installiert sein. Der Installer hat die Aufgabe Anwendungen zu installieren, wenn diese bereitgestellt werden und vertrauenswürdig sind. Der Installer ist in einer bevorzugten Ausführungsform so ausgebildet, dass er Anwendungen ohne die Interaktion mit einem Benutzer auf dem Gerät im Hintergrund installiert. Zusätzlich überprüft der Installer, ob der Assistent einen zulässigen Namen und/oder ein zulässiges Zertifikat aufweist. Durch eine solche Sicherheitsüberprüfung wird sichergestellt, dass nur ein zulässiger Assistent Anwendungen installiert bzw. der zulässige Assistent ruft den Installer auf, um Anwendungen zu installieren. Durch die Überprüfung wird sichergestellt, dass keine unzulässige Anwendung (Malware) den Installer aufruft und damit beliebige Apps ohne Zutun und Wissen des Benutzers installieren kann. Die Liste mit den Namen und den Zertifikaten, die ebenfalls die erlaubten Programme darstellen, können durch den Installer von einem Server herunter geladen werden. Das Herunterladen erfolgt in einer bevorzugten Ausführungsform über ein Standard Internet Protokoll (IP) über bekannte sichere Übertragungsmechanismen wie HTTP PS oder GLS. Der Installer ist vorzugsweise eine Anwendung die ein integraler Bestandteil des Betriebssystems ist und die den Standard Installer, der hier zum Beispiel beim Endgerät verwendet (Market) bzw. Play Store ergänzt. Der Installer weist eine eigene Funktionalität auf und erlaubt es Anwendung eigenständig im Betriebssystem zu installieren. Bevor somit eine Anwendung bzw. ein binäres App installiert wird, die auf das Gerät geladen wurde, erfolgt eine Überprüfung des Assistenten, der diese Anwendung installieren will. Die Überprüfung erfolgt auf der Basis von Signaturen oder Hashwerten und vorzugsweise dem Namen des Anwendungspaketes bzw. der Anwendung selber. Zusätzlich ist eine weitere Anwendung notwendig, die Assistent genannt wird, die entweder ebenfalls vorinstalliert ist oder über einen Anwendungsstore (App Store) installiert wird. Es handelt sich dabei um eine Anwendung, die oberhalb des Betriebssystems installiert wird. Das heißt sie ist kein integraler Bestandteil des Betriebssystems, um die Funktionsweise des Betriebssystems zu erweitern. Diese Anwendung erkennt das erstmalige Starten bzw. die erstmaligen Einrichtungsprozeduren eines mobilen Endgerätes und lädt die binären Programme/Apps herunter, die auf dem mobilen Endgerät vorinstalliert sein sollen. Nach dem Herunterladen der Anwendungen von einem App-Store oder einem anderen Speicher aus dem Internet (ftp, tftp etc.), wird eine Anfrage an den Installer vom Assistenten gesendet, um die heruntergeladenen Anwendungen bzw. Anwendungspakte/Installationspakete zu installieren. Der Installer überprüft den Assistenten anhand des Namen und des Zertifikats in der Liste, die dem Installer zur Verfügung steht und installiert die Anwendungen. Der Assistent bzw. die Assistent Anwendung hat den Vorteil, dass sie kann pro Anwendungsland und Gerätetyp und/oder Vertragstyp unterschiedlich sein. Die Anwendung kann somit eine spezifische Konfiguration für unterschiedliche Typen von Geräten und Länder bzw. auch für unterschiedliche Verträge berücksichtigen. Die Anwendungen erlauben somit, dass Anwendungen nachinstalliert werden, ohne den Benutzer durch einen manuellen Installationsprozess für jede Anwendung zu belasten. Ferner wird sichergestellt, dass durch die Überprüfung der Zertifikate und der Anwendungsnamen lediglich solche Anwendungen das Recht bekommen werden weitere Anwendungen zu installieren, für die es eine entsprechende Vereinbarung mit Partnern gibt. Die Verwendung des Assistenten ermöglicht es, unterschiedliche Assistenten für Gerätetypen Länder und Verträge bereitzustellen, die lediglich solche Anwendungen runterladen, die passend sind für das jeweilige Gerät. In einer weiteren möglichen Ausführungsform ist der Assistent weiterhin dazu in der Lage Werbung oder besondere Angebote anzuzeigen. Hieraus ergibt sich, dass die Anwendungen pro Gerät und Land nach installiert werden und durch die minimale Benutzer-Interaktion wird sichergestellt, dass lediglich erlaubte Anwendungen installiert werden. Aufgrund der Überprüfung gibt es ferner eine Trennung zwischen einem Installer-Programm, das in das Betriebssystem bzw. die Firmware integriert ist und einer normalen Anwendung wie dem Assistenten, die einfach zu managen und flexibel einzusetzen sind. Der Installer hat in der Regel eine Funktionalität, bzw. Berechtigung, die eine Installation ohne Rückfragen mit dem Benutzer im Hintergrund erlaubt. Diese Berechtigung erlangt der Installer durch entsprechende Rechte im Betriebssystem, das heißt er läuft als Prozess mit sehr hohen Benutzerrechten, insbesondere Root-Rechten, oder er ist Teil der Betriebssystemfunktionalität. Der Installer holt sich von einem bestimmten Server eine Anwendungsliste über HTTP PS. Andere Protokolle, die vorzugsweise verschlüsselt sind, sind natürlich ebenfalls denkbar. Die Adresse des Servers ist voreingestellt. In der Regel erfolgt ein Abruf der über eine bestimmte IP Adresse. Zurück gegeben wird vom Server eine Liste mit signierten Informationen über Anwendungen, die weitere Anwendungen installieren dürfen. Der Installer verwaltet diese Liste in einem sicheren Speicherbereich. In der Regel wird diese Liste regelmäßig abgerufen, um Änderungen festzustellen. Die Liste umfasst in der Regel lediglich die Anwendungsnamen und die entsprechenden Signaturen. Der Assistent lädt dann nach dem erstmaligen Starten des mobilen Telefons, das durch entsprechende Flags erkannt werden kann, eine spezifische Liste von Anwendungen von einem Server herunter, die für das spezifische Gerät in der spezifischen Konfiguration zu installieren sind. Das erstmalige Starten des Telefons kann erkannt werden, indem bestimmte Flags in einem nicht flüchtigen Speicher gesetzt werden. Sollte zum Beispiel ein mobiles Telefon in seinen ursprünglichen Zustand zurückgesetzt geworden sein, so werden diese Flags gelöscht. Bei einem Starten weiß dann der Assistent, dass erneut alle Programme zu installieren sind, die in den Listen definiert wurden. Der Server kann somit Listen verwalten bzw. nach Regeln dynamisch zusammensetzen, die für Gerätetypen, Vertragstypen, Länder spezifisch sind. Durch die Übermittlung der Liste an den Assistent, wird diese in Kenntnis darüber gesetzt, welche Anwendungen im nächsten Schritt herunter zu laden sind. Der Assistent greift dabei auf die Eigenschaften des Telefons und der SIM-Karte, sowie deren Informationen zurück und übermittelt diese an den Server. Der Installer und der Assistent sind bereits konfiguriert, so dass die Netzwerkadresse des Servers bekannt ist. Der Server wird vom Netzprovider über ein Netzwerk (IP-Newtzwerk) bereitgestellt, um eine Vielzahl von Signaturen und Namen von Anwendungen in spezifischen Listen zusammen zu zustellen, die dann zum Download bereitgestellt werden. Die Signaturen zeigen an, welche Anwendungen vom Netzprovider unterstützt werden. Die Bereitstellung der Signatur ist dabei spezifisch von der installierten SIM-Karte und /oder der Betriebssystemversion abhängig. Andere Parameter sind ebenfalls denkbar und werden unten beschrieben. Durch diesen Ansatz ist es möglich, dass der Provider des Netzwerkes festlegen kann, welche Anwendungen von ihm auf dem mobilen Endgerät unterstützt werden. Durch diesen Ansatz ist es ebenfalls möglich für die Anwendung, die auf dem mobilen Endgerät läuft, zu erkennen, ob die Anwendung vom Netzwerkprovider unterstützt wird oder nicht. Die Anwendung, die auf dem mobilen Endgerät installiert ist oder durch den Benutzer installiert wird, kann über eine im Vorfeld festgelegte Schnittstelle auf den Server zugreifen. In der Regel jedoch dient die Signatur zur Überprüfung der Ausführung von Anwendungen und der Unterstützung der Anwendungen für den Entwickler der Anwendung. Der Assistent erhält z.B. Informationen beim Start der Anwendung oder bei bestimmten Abläufen innerhalb der Anwendung und kann dadurch eine Statistik führen, die dem Provider mitgeteilt wird. Auch kann die Signatur bei einer erstmaligen Installation der Anwendung abgefragt werden.

Das Verfahren umfasst weiter die Schritte:
- Herunterladen der für das mobile Endgerät spezifischen Signaturen vom Server durch den Installer und
- Speichern dieser Signaturen in einem Signatur Speicherplatz auf dem mobilen Endgerät;

In einer bevorzugten Ausführungsform werden die Signaturen auf einem Speicherplatz auf dem mobilen Endgerät abgelegt, der verschlüsselt ist. Die Verschlüsselung wird durch bekannte Verfahren erreicht, insbesondere kann dies durch ein integriertes Kryptomodul oder über die SIM-Karte erfolgen. Es ist natürlich denkbar, dass bei Geräten die permanent online sind eine lokale Speicherung vermieden werden kann. Die Speicherung kann auch so ausgebildet sein, dass die Signaturen lediglich gecacht werden und keine gesamte Liste von Signaturen herunter geladen wird, sondern lediglich die Signaturen, die benötigt werden bzw. von einer Anwendung die auf dem mobilen Endgerät installiert werden soll.

Das Starten der Anwendung kann unterschiedliche Funktionen beinhalten. Einerseits kann beim erstmaligen Starten eine Abfrage nach der Signatur erfolgen oder während des Programmablaufs kann immer wieder ein Abfragen der Signatur beim Installer erfolgen. Auch kann eine Abfrage beim Starten einer bestimmten Funktion notwendig sein. Ferner ist es denkbar dass die Signatur nur beim Installationsprozess abgefragt wird.

In einer bevorzugten Ausführungsform konfiguriert sich die Anwendung auf der Basis der erhaltenen Signatur. Die Konfiguration kann umfassen, dass bestimmte bildliche Darstellungen verwendet werden bzw. Darstellungen und Markenhinweise der Netzbetreiber bzw. Netzprovider. Weiterhin können besondere Funktionen in Abhängigkeit der Signatur freigeschaltet werden. Auch ist es möglich bestimmte Funktionen zu deaktivieren. Hieraus ergibt sich, dass die Signatur dynamisch auf die Anwendung einwirkt, indem bestimmte Funktionen und Aspekte frei gestaltet oder blockiert werden. Hierdurch ist es möglich zwischen Anwendungen zu unterscheiden, die ursprünglich bei der Erstinstallation installiert wurden, und somit vom Provider unterstützt wurden, und Anwendungen, die nachträglich durch den Benutzer manuell installiert wurden. Sollte der Provider zum Beispiel bestimmte Anwendungen unterstützen, wie Navigationssysteme, so können diese Anwendungen beim Installer die Signaturen nachfragen bzw. überprüfen lassen, um dann Zusatzfunktionen frei zu schalten. Anwendungen die im Nachhinein installiert werden, können ebenfalls auf diese Schnittstelle zugreifen, wenn die Anwendung jedoch nicht in einer entsprechenden Liste der zulässigen Anwendung hinterlegt ist, so erfolgt keine Freischaltung von Funktionen.

Die Signatur umfasst in der Regel Komponenten, die aus der Verschlüsselung und Signaturtechnik bekannt sind. So ist zum Beispiel ein öffentlicher und privater Schlüssel denkbar, die in die Signatur einfließt. Es kann somit zum Beispiel eine Information im Signatur-Element enthalten sein, die durch den öffentlichen Schlüssel der Anwendung bzw. des Unternehmens, das die Anwendung entwickelt hat, verschlüsselt wurde. Die Anwendung selber kann dann auf der Basis des implementierten privaten Schlüssels die Signatur überprüfen. In einer alternativen Ausführungsform leitet die Anwendung die Signatur an den Server, der die Signatur überprüft. Hierdurch kann vermieden werden, dass der private Schlüssel in der Anwendung selber enthalten ist. Nachdem die Bestätigung der Signatur erfolgte, wird dann eine Abarbeitung durch die Anwendung vorgenommen.

Neben einem Zertifikat und/oder einem öffentlichen Schlüssel der Anwendung umfasst die Signatur vorzugsweise eine Identifikation für die Anwendung, wobei die Identifikation der Anwendung der PacketName der Anwendung sein kann.

In einer möglichen Ausführungsform werden eine Menge von Signaturen regelmäßig vom Server heruntergeladen und gespeichert. Die Auswahl der Signatur bzw. die Zuordnung der Signatur zum mobilen Endgerät kann auf unterschiedlichen Filterkriterien basieren. In der Regel sind bestimmte Signaturen nur für bestimmte Telefone von bestimmten Herstellern unter Berücksichtigung bestimmter Provider nutzbar. Bei einer Anfrage der Signatur beim Server, werden die Signaturen auf der Basis einer oder mehrerer der folgenden Informationen bereitgestellt: SIM-Informationen, Endgerätetyp, Betriebssystemtyp, Betriebssystemversion, Laufzeit der Signatur. Es sind natürlich noch weitere Kriterien denkbar, wie die Art des Mobilfunkvertrages, der Leistung des mobilen Telefons, etc.

In der bevorzugten Ausführungsform befinden sich die Komponenten, wie Server in einem IP-Netzwerk (Internet), das über die bekannten DNS Dienste abgefragt werden kann. Somit kann der Server zum Beispiel einen festen Domänennamen oder ebenfalls eine feste IP Adresse verwalten. Es ist ebenfalls denkbar, dass bestimmte reservierte Bereiche der Adresse verwendet werden, die vom Netzprovider verwaltet werden. Die Server laufen in der Regel auf bekannten Computersystemen, die mit entsprechenden Betriebssystemen wie Linux, Windows oder Unix ausgerüstet sind, um den entsprechenden Dienst im Netzwerk bereitzustellen. In der Regel werden Netzwerkprotokolle verwendet, wie sie aus einem IP basierten Netzwerk bekannt sind. Das Mobile Endgerät ist in der Regel ein Smartphone auf der Basis von Android, Apple iOS, Windows Mobile, Symbian oder Ähnlichem. Diese Telefone weisen Prozessoren, Basisband Prozessoren, Speicher, und entsprechende Schichten eines Betriebssystems auf. Das Betriebssystem, wird oftmals auch als Firmware bezeichnet und wird in einem Speicherbereich abgelegt, der veränderbar ist. In der Regel handelt sich hierbei um Flash Speicher.

Ein weiterer Teil der Erfindung sind die einzelnen Komponenten, die das Verfahren implementieren. Ein Server, ein Installer und ein Assistent. Wie bereits oben ausgeführt wurde, ist der Installer vorzugsweise ein Teil der Firmware bzw. eine Anwendung, die in der Firmware des mobilen Endgerätes vorinstalliert ist, wenn es dem Endkunden ausgeliefert wird. Der Server ist ein Computersystem, das eine Datenbank bereitstellt, in der die Vielzahl von Signaturen abgelegt sind. Die Datenbank kann dabei eine relationale Datenbank oder eine objektorientierte Datenbank sein oder jegliche andere Art von Datenbank. Auf dem Computersystem läuft in der Regel ein bekanntes Betriebssystem, wie es oben ausgeführt wurde. In einer weiteren Ausführungsform ist der Zugriff auf den Server nur durch mobile Endgeräte möglich, die sich im Netzwerk des Netz-Providers befinden. D.h. es erfolgt in der Regel eine Maskierung anhand der Netzwerkadressen oder eine Maskierung anhand der Identifikation des mobilen Endgerätes. Der Server ist in der Regel ein System, das ebenfalls eine Datenbank verwaltet oder Web Dienste, auf die die mobilen Endgeräte und die Anwendungen zugreifen können.

### Kurze Figurenbeschreibung:

Im Folgenden werden die Figuren beschrieben, die eine mögliche Implementierung der Erfindung darstellen, wobei die Figuren nicht als eine Beschränkung aufzufassen sind.
- Fig. 1: zeigt ein Ablaufdiagramm des Verfahrens;
- Fig. 2: zeigt ein Beispiel eines Aufbaus einer List mit Signaturen;
- Fig. 3: zeigt einen Aufbau der Liste

### Detaillierte Beschreibung der Figuren:

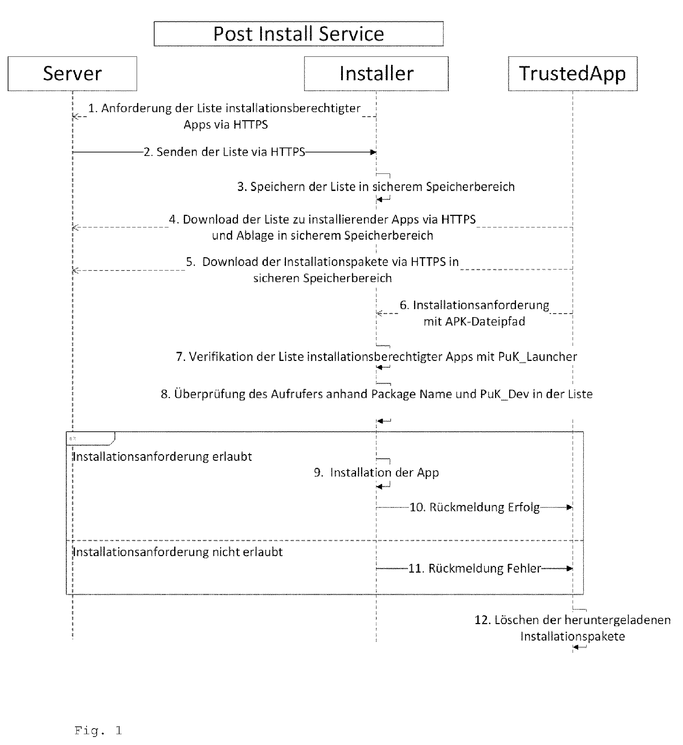

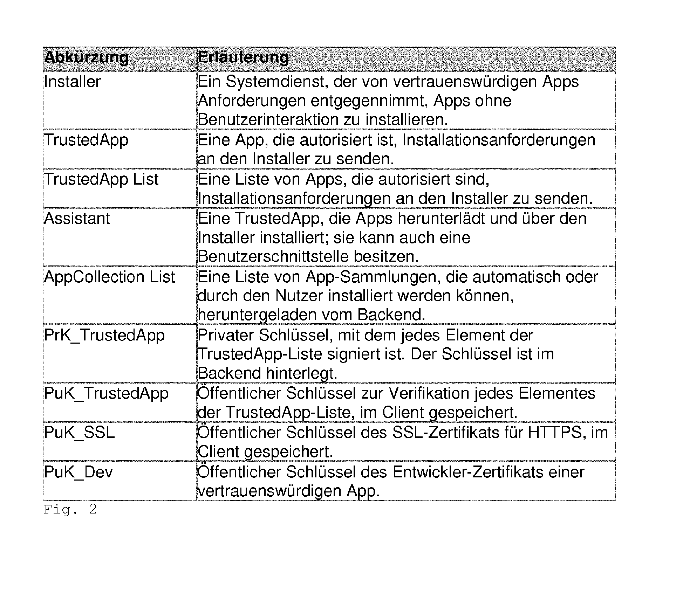

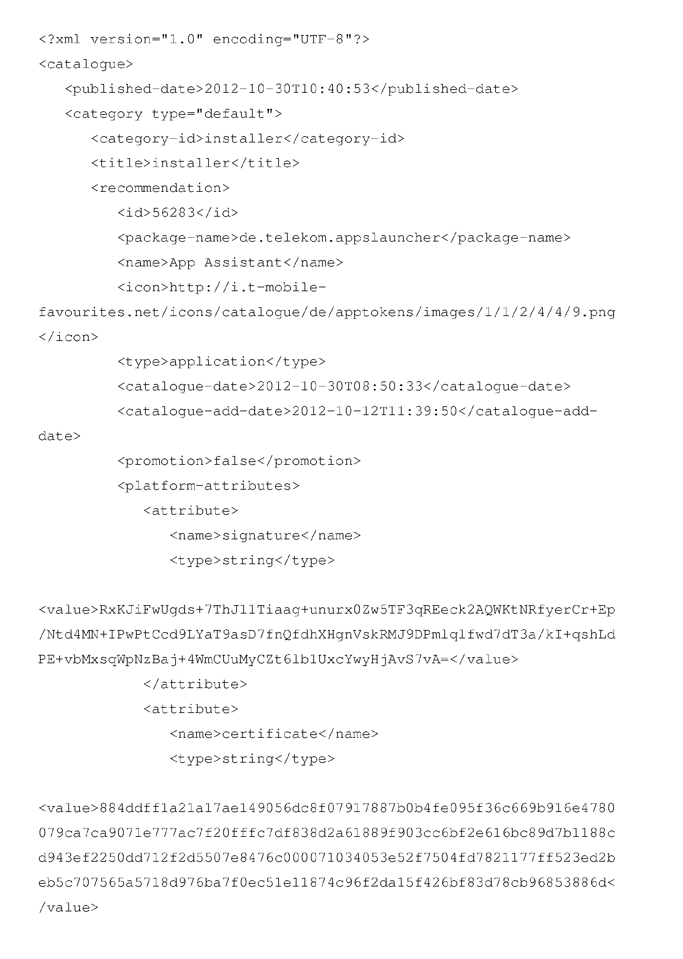

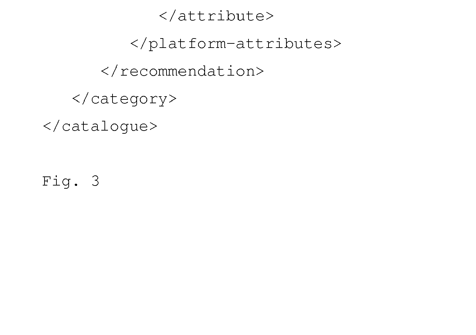

Fig. 2 zeigt eine Übersicht von Abkürzungen, die verwendet werden in Bezug zu Figur 1 und 3.

Die Figur 1 zeigt die unterschiedlichen Komponenten, die bei der vorliegenden Erfindung berücksichtigt werden. Erstens der Server, der mit dem Installer in Kontakt steht, und zweitens der Assistent der ebenfalls mit dem Server in Kontakt steht. Bei diesem Server kann es sich auch um zwei unterschiedliche Server handeln, die jeweils unterschiedliche Strukturen aufweisen können. In einer bevorzugten Ausführungsform handelt es sich jedoch um lediglich einen Server. Der Installer fragt eine App-Liste mit Signaturen vom Server an. Diese Anfrage kann zum Beispiel über das Protokoll HTTPS erfolgen, das entsprechend verschlüsselt ist. Der Server gibt dann basierend auf der Anfrage eine Liste von Anwendungen mit Signaturen, in der Regel auch über die gleiche Verschlüsselungsart HTTPS, zurück, die spezifisch für das mobile Endgerät sind. Es ist hierbei zu beachten, dass der Installer auf dem mobilen Endgerät abläuft und der Server über ein Netzwerk vom mobilen Endgerät erreicht wird. Die übertragende Liste definiert diejenigen Anwendungen, die mit dem Installer kommunizieren dürfen, um Anwendungen im Hintergrund vorzugsweise ohne Eingriff des Benutzers zu installieren. Der Installer übernimmt somit die Aufgabe der Installation und stellt eine Schnittstelle zum System bereit, um Anwendungen zu installieren. Weiterhin läuft eine Anwendung, eine so genannte Assistent App, auf dem mobilen Endgerät, die im Laufe ihrer Abarbeitung insbesondere beim ersten Starten des Gerätes eine Liste von Anwendungen vom Server lädt. Diese Anfrage wird vom Server überprüft, ob sie in ihrer Art zulässig ist, um dann im Falle der Zulässigkeit eine Liste von Anwendungen zurückzugeben, die bei einem ersten Start zu installieren sind. Nachdem die Liste von Anwendungen vom Assistent heruntergeladen wurde, erfolgt ein Herunterladen der Anwendungspakete, die für die Installation vorgesehen sind, auf das mobile Endgerät. Diese Anwendungspakete werden dem Installer übergeben, bzw. es wird eine URI Anfrage mit dem Ablageort übergeben. Der Installer überprüft, ob es sich beim Aufrufer, also beim Assistent, um eine zulässige Anwendung handelt, die ebenfalls eine zulässige Signatur aufweist und nicht modifiziert wurde, mit Hilfe der Signatur in seiner Liste. So erfolgt eine Installation im Hintergrund, bei der der Benutzer nicht eingreifen muss. Es wird somit eine Hintergrund Installation vorgenommen, von der der Benutzer keinerlei Kenntnis hat. Hierdurch kann das Gerät beim ersten Einsatz bzw. beim ersten Anschalten mit der richtigen Software versehen werden, ohne dass diese bereits in der Firmware integriert ist. Nach einer erfolgreichen Installation wird eine entsprechende Meldung an den Assistent übergeben, dass die Installation erfolgreich war. Falls die Anfrage nicht zulässig war bzw. die Anwendung nicht den Vorgaben der Signatur entsprach und den entsprechenden Namen aufwies, so wird ein entsprechender Fehler mitgeteilt.

Figur 3 zeigt ein Beispiel einer Anwendungs-Liste, die in diesem Falle nur aus einer Anwendung besteht. Hierbei handelt es sich um eine Liste für die Anwendung App Assistent, deren Daten übergeben werden. Zuerst wird die Liste durch <id> geöffnet. Die ID steht für eine Identifikation der Liste, so dass die Liste zu einem späteren Zeitpunkt eindeutig identifiziert werden kann. Im Folgenden wird ein Paketname definiert, aus dem ersichtlich ist um welche Anwendung um welche Provider es sich handelt. Es werden einerseits Signaturen übertragen, die es ermöglichen, zu erkennen ob die Anwendung berechtigt ist mithilfe des Installer andere Anwendungen zu installieren. Hierzu wird die Signatur verwendet, die durch den PrK_Launcher erzeugt wurde. Anhand dieser Signatur kann festgestellt werden, dass es sich um eine zulässige Anwendung handelt, da sie vom entsprechenden Server mit dem privaten Schlüssel erzeugt wurde. In diesem Zusammenhang wird nochmals auf die Tabelle in Figur 2 und Figur 1 verwiesen. Ferner finden sich noch öffentliche Schlüssel von den Entwicklern, die diese Anwendung entwickelt haben um entsprechende Überprüfung von Signaturen vornehmen zu können.

Die Elemente im Einzelnen:
· <published-date>: Veröffentlichungsdatum der Liste, kann zur Aktualitätsprüfung herangezogen werden
· <category>, <category-id>, <title>: Dies ist der Header für eine Kategorie, in diesem Fall enthält diese Kategorie die vertrauenswürdigen Apps. Es können Kategorien für andere Zwecke in dieser Datei enthalten sein.
· <recommendation>: Jede TrustedApp ist eine <recommendation>. Dieser Begriff hat nur historische Gründe.
· <id> ist ein eindeutiger Bezeichner innerhalb des Content Management-Systems,
· <package-name>: Der Package Name der vertrauenswürdigen App
· <name>, <icon>, <type>, <catalogue-date>, <catalogue-add-date>, <promotion>: Attribute der vertrauenswürdigen App
· <platform-attributes>: Diese enthalten weitere Attribute, hier konkret die Signatur und den öffentlichen Schlüssel des Zertifikats der vertrauenswürdigen App.
· <signature>: Dies ist die mit SHA-2 erzeugte Signatur aus dem Package Name und dem öffentlichen Schlüssel des Zertifikats der vertrauenswürdigen App, verschlüsselt mit einem privaten Schlüssel (der Schlüssel heißt "PrK_TrustedApp" in den anderen Dokumenten)
· <certificate>: Der öffentliche Schlüssel des Zertifikats der vertrauenswürdigen App

## Patentansprüche

1. Verfahren zur Steuerung der Installation von Anwendungen auf einem mobilen Endgerät, mit einem Installer, der auf dem mobilen Endgerät installiert ist, und der so in das Betriebssystem des mobilen Endgerätes integriert ist, dass eine Installation im Hintergrund ohne Eingriff eines Benutzers erfolgt, und der die Netzwerkadresse eines Servers kennt, wobei der Server vom Netzprovider über ein Netzwerk bereitgestellt wird, um eine Liste von zulässigen Anwendungen bereitzustellen, die durch den Installer Anwendungen installieren können, wobei die Liste Zertifikate für jede Anwendung umfasst und deren Namen, anhand derer eindeutig festgestellt werden kann, ob die Anwendung auf den Installer zugreifen darf ,
weiterhin umfassend einen Assistent, der als Anwendung auf dem mobilen Endgerät läuft, und der die Adresse des Servers kennt, um von diesem eine Liste mit zu installierenden Anwendungen zu erhalten,
umfassend die Schritte:
- Herunterladen durch den Installer einer Liste von zulässigen Anwendungen und Speichern dieser Liste auf dem mobilen Endgerät, wobei die Liste die Namen und Zertifikate der zulässigen Anwendungen aufweist;
- Herunterladen durch den Assistenten von dem Server einer Liste von zu installierenden Anwendungen, vorzugsweise beim erstmaligen Starten des mobilen Endgerätes beim Endkunden, wobei die Liste den Speicherort der Anwendungen umfasst;
- Herunterladen durch den Assistenten der Anwendungen aus dem Netzwerk als Installationspakete, um diese als Installationspakete auf dem mobilen Endgerät abzulegen
- Übergabe des Ablageortes der Installationspakete durch den Assistenten an den Installer;
- Überprüfen des Assistenten durch den Installer mit Hilfe der Zertifikate und der Namen aus der Liste von zulässigen Anwendungen, falls die Überprüfung erfolgreich ist, zulassen der Installation durch den Assistenten in Verbindung mit dem Installer ohne Eingriff durch einen Benutzer.

2. Das Verfahren nach dem vorhergehenden Anspruch, wobei sich die Anwendung auf der Basis des Zertifikats konfiguriert.

3. Das Verfahren nach dem vorhergehenden Anspruch, wobei die Anwendung Funktionen auf der Basis des Zertifikats freischaltet.

4. Das Verfahren nach dem vorhergehenden Anspruch, wobei die Identifikation der Anwendung ein Installations-PacketName der Anwendung ist.

5. Das Verfahren nach einem oder mehreren der vorhergehenden Ansprüche, wobei die Zertifikate, die vom Installer heruntergeladen wurden, in einem sicheren Speicherbereich abgelegt werden.

6. Das Verfahren nach einem oder mehreren der vorhergehenden Ansprüche, wobei bei einer Anfrage des Installers und/oder des Assistent beim Server, die Zertifikate oder die Liste der zu installierenden Anwendung auf der Basis einer oder mehrerer der folgenden Informationen bereitgestellt werden: SIM-Informationen, Endgerätetyp, Betriebssystemtyp, Betriebssystemversion, Laufzeit des Zertifikats.

7. Das Verfahren nach einem oder mehreren der vorhergehenden Ansprüche, wobei der Installer Teil des Betriebssystems ist, und mit einer Berechtigung ausgeführt wird, die eine Installation von Anwendungen ohne Eingriff eines Benutzers erlaubt.

8. Das Verfahren nach einem oder mehreren der vorhergehenden Ansprüche, wobei der Speicherort der Anwendungen ein Market-Place/Playstore oder ein Datei-Server ist, insbesondere FTP.

9. Das Verfahren nach einem oder mehreren der vorhergehenden Ansprüche, wobei der Assistent als Anwendung auf der Anwendungsebene des Betriebssystems läuft.

10. Das Verfahren nach einem oder mehreren der vorhergehenden Ansprüche, wobei der Assistent anhand von Schaltern und/oder Flags erkennt, ob das mobile Endgerät aus einem ursprünglichen Zustand kommt.

11. System zur Steuerung der Installation von Anwendungen auf einem mobilen Endgerät, **gekennzeichnet durch** einen Installer, einen Server und einen Assistenten, die eingerichtet und ausgebildet sind, um das Verfahren nach einem oder mehreren der Ansprüche 1 bis 10 durchzuführen.

## Claims

1. A method for controlling the installation of applications on a mobile device, with an installer which is installed on the mobile device, and which is integrated into the operating system of the mobile device in such way, that a silent installation without action of the user takes place and which knows the network address of a server, wherein the server of the network provider is provided over a network to provide a list of acceptable applications which are able to install applications through the installer, wherein the list includes certificates for each application and their names, the basis of which can be clearly stated, whether the application is allowed to access the installer,
further comprising an assistant, which runs as an application on the mobile device, and which knows the address of the server as to receive a list of applications to be installed from the same,
comprising the steps of:
- downloading through the installer of a list of permitted applications and saving this list on the mobile device, wherein the list includes the names and certificates of the permitted applications;
- downloading through the assistant from the server of a list of applications to be installed, preferably at the first start of the mobile device with the end customer, wherein the list includes the memory location of the applications;
- downloading through the assistant of the applications from the network as installation packages to store these as an installation package on the mobile device;
- handing over the storage location of the installation packages through the assistant to the installer;
- checking the assistant by the installer using the certificates and the names from the list of permitted applications, if the verification is successful, allowing the installation by the assistant in conjunction with the installer without action of the user.

2. The method according to the preceding claim, wherein the application is configured on the basis of the certificate.

3. The method according to the preceding claim, wherein the application activates functions on the basis of the certificate.

4. The method according to the preceding claim, wherein the identification of the application is an installation package of the application name.

5. The method according to one or more of the preceding claims, wherein the certificates that have been downloaded by the installer are stored in a secure memory area.

6. The method according to one or more of the preceding claims, wherein at a request of the installer and / or the assistant to the server, the certificates or the list of the installed applications on the basis of one or more of the following information are provided: SIM information, terminal type, operating system type, operating system version, duration of the certificate.

7. The method according to one or more of the preceding claims, wherein the installer is part of the operating system, and is performed with a permission that allows an installation of applications without action of a user.

8. The method according to one or more of the preceding claims, wherein the location of the applications is a Market Place I Playstore or a file-server, in particular FTP.

9. The method according to one or more of the preceding claims, wherein the assistant is running as an application on the application level of the operating system.

10. The method according to one or more of the preceding claims, wherein the assistant recognizes on the basis of switches and / or flags, whether the mobile terminal is made in an original state.

11. A system for controlling the installation of applications on a mobile device, **characterized by** an installer, a server and an assistant, who are appointed and formed to carry out the process according to one or more of claims 1 to 10.

## Revendications

1. Un procédé pour commander l'instailation d'applications sur un terminal mobile, avec un installateur qui est installé sur le terminal mobile, et qui est intégré au sein du système d'exploitation du terminal mobile de telle manière qu'une installation silencieuse s'effectue sans action de l'utilisateur et connaissance l'adresse d'un serveur, dans lequel le serveur du fournisseur d'accès est fourni via un réseau pour fournir une liste d'applications acceptables qui sont susceptibles d'installations au travers l'installateur, dans lequel la liste comporte des certificats pour chaque application et leurs noms, et avec une formulation claire de la possibilité pour l'application d'accéder à l'installateur,
comportant en outre un assistant, s'exécutant sous forme d'une application au sein du terminal mobile, et qui connaît l'adresse du serveur pour recevoir une liste d'application devant être installées à partir de celui-ci,
comprenant les étapes :
- téléchargement via l'installateur d'une liste d'applications autorisées et l'enregistrement de cette liste sur le terminal mobile, dans lequel la liste comporte les noms et certificats des applications autorisées ;
- téléchargement, via l'assistant et depuis le serveur, d'une liste d'applications devant être installées, de préférence au premier démarrage du terminal mobile avec le consommateur final, dans lequel la liste comporte l'emplacement mémoire des applications ;
- téléchargement via l'assistant des applications depuis le réseau sous la forme de packages d'installation, les packages d'installation étant stockées sur le terminal mobile ;
- transmission à l'installateur de l'emplacement de stockage des packages d'installation via l'assistant ;
- test de l'assistant par l'installateur au moyen des certificats et des noms à partir de la liste des applications permises, et si le test réussi, autoriser l'installation par l'assistant conjointement avec l'installateur sans action de l'utilisateur.

2. Le procédé selon la revendication précédente, dans lequel l'application est configurée à partir du certificat.

3. Le procédé selon la revendication précédente, dans lequel l'application active des fonctions à partir du certificat.

4. Le procédé selon la revendication précédente, dans lequel l'identification de l'application est un package d'installation du nom de l'application.

5. Le procédé selon l'une ou plusieurs des revendications précédentes, dans lequel les certificats qui ont été téléchargés par l'installateur sont stockés au sein d'un espace mémoire sécurisé.

6. Le procédé selon une ou plusieurs des revendications précédentes, dans lequel à la demande de l'installateur et/ou de l'assistant transmise au serveur, les certificats ou la liste des applications installées sont fournis sur la base de l'une ou plusieurs des informations suivantes : information SIM, type de terminal, type de système d'exploitation, version du système d'exploitation, durée du certificat.

7. Le procédé selon une ou plusieurs des revendications précédentes, dans lequel l'installateur est une partie du système d'exploitation, et est réalisé avec une permission autorisant l'installation d'applications sans action de l'utilisateur.

8. Le procédé selon une ou plusieurs des revendications précédentes, dans lequel l'emplacement des applications est un serveur commercial/Playstore ou un serveur de fichier, notamment FTP.

9. Le procédé selon une ou plusieurs des revendications précédentes, dans lequel l'assistant s'exécute sous la forme d'une application sur le niveau application du système d'exploitation.

10. Le procédé selon une ou plusieurs des revendications précédentes, dans lequel l'assistant reconnaît sur la base de commutateurs et/ou de drapeaux si le terminal mobile est original.

11. Un système pour commander l'installation d'applications sur un terminal mobile, **caractérisé par** un installateur, un serveur et un assistant, qui sont affectés et configurés pour réaliser le procédé selon une ou plusieurs des revendications 1 à 10.
